# EUROPÄISCHE PATENTSCHRIFT

(11) **EP 3 515 677 B1**
(45) Veröffentlichungstag und Bekanntmachung des Hinweises auf die Patenterteilung: **04.11.2020**
(21) Anmeldenummer: 17781406.8
(22) Anmeldetag: 19.09.2017
(51) Int. Cl.: B29B 17/02, B29K 105/06, B29K 101/12

(54) **VERFAHREN UND VORRICHTUNG FÜR DAS RECYCLING VON THERMOPLASTISCHEM FASERVERBUNDMATERIAL**
METHOD AND DEVICE FOR RECYCLING THERMOPLASTIC FIBRE-REINFORCED COMPOSITE MATERIAL
PROCÉDÉ ET DISPOSITIF POUR LE RECYCLAGE D'UN MATÉRIAU COMPOSITE THERMOPLASTIQUE RENFORCÉ PAR FIBRES

(30) Priorität: 19.09.2016 DE 102016117559
(43) Veröffentlichungstag der Anmeldung: 31.07.2019
(73) Patentinhaber: Fraunhofer Gesellschaft zur Förderung der angewandten Forschung e.V., 80686 München (DE)
(72) Erfinder: JANSSEN, Henning, 52074 Aachen (DE)
(74) Vertreter: Naeven, Ralf
(86) Internationale Anmeldenummer: PCT/EP2017/073670
(87) Internationale Veröffentlichungsnummer: WO 2018/050926

(56) Entgegenhaltungen:
- EP-A1- 2 977 190
- WO-A1-2012/085000
- DE-A1- 19 943 751
- JP-A- 2009 132 028
- KR-B1- 100 736 449

## Beschreibung

Die Erfindung betrifft ein Verfahren gemäß dem Oberbegriff des Anspruchs 1 sowie eine Vorrichtung gemäß dem Oberbegriff des Anspruchs 10. Bauteile aus oder mit thermoplastischem Faserverbundmaterial können vielfältig genutzt werden, insbesondere als hochfeste Bauteile, wie z.B. Rohre für Pipelines oder Drucktanks. Oftmals weist das Faserverbundmaterial endloses, das heißt unterbrechungsfreies, Fasermaterial auf. Das Fasermaterial kann dabei beispielsweise als mit Kunststoffmatrix vorimprägniertes Halbzeug vorliegen. Dies können z.B. einschichtige Faserhalbzeuge, sogenannte Bändchenhalbzeuge sein, bei denen die Fasern entweder unidirektional oder multidirektional vorliegen. Solche Halbzeuge können in verschiedenen Verfahren, u.a. einem Bändchenablege- oder Wickelverfahren zu Bauteilen verarbeitet und insbesondere auch in mehreren Schichten aufgetragen werden.

Recycling von kohlenstofffaserverstärkten Kunststoffen wurde bereits diskutiert (Kohlenstofffaserverstärkte Kunststoffe im Fahrzeugbau - Ressourceneffizienz und Technologien; VDI ZRE Publikationen: Kurzanalyse Nr. 3, VDI Zentrum für Ressourceneffizienz, 2013, überarbeitete Auflage März 2014). Demnach ist es bekannt, das der Wiederverwertung zuzuführende Material zu zerschneiden, was mit einer entsprechenden Verkürzung der Kohlenstofffasern einhergeht. Damit kommt es zu einem sogenannten Downcycling, d.h. das wiedergewonnene Material ist von minderer Qualität und nur entsprechend beschränkt einsetzbar. Zudem wird gelehrt, dass es auf eine effiziente Trennung von Fasern und Matrixmaterial ankommt.

Aus der EP 1892072 A1 ist ein Verfahren zum Recycling von thermoplastischen kohlenstofffaserverstärkten Materialien bekannt, bei dem das Verbundmaterial zunächst geschreddert und anschließend einem Spritzgussprozess zugeführt wird. Das durch das Recycling gewonnene Material liegt auch hier lediglich mit kurzen Kohlenstofffasern vor.

Aus der DE 102011115966 B4 ist ein Verfahren zur Herstellung eines Kohlenstofffaser-Recyclats für CFK-Bauteile bekannt, bei dem ein CFK-Material zerkleinert wird, welches Kohlenstofffaser-Bündel in einem Matrixmaterial aufweist. Ziel ist es, ein Recyclat-Ausgangsmaterial zu erhalten, in dem von Matrixmaterial umgebene Kohlenstofffaser-Bündel-Abschnitte vorliegen. Das Recyclat-Ausgangsmaterial wird einer Zersetzungsbehandlung in Form einer Pyrolyse oder Carbonisierung des Matrixmaterials unterzogen. Auch hierbei können die Kohlenstofffasern nicht ihre ursprüngliche Länge behalten.

Aus der EP 1160068 B1 ist es bekannt, Verbundmaterial derart einer Mikrowellenstrahlung auszusetzen, dass das Matrixmaterial soweit zersetzt wird, dass die darin enthaltenen Kohlenstofffasern weitgehen schadlos herausgetrennt werden können. Dabei kann auch der Einsatz eines Lösungsmittels für das Matrixmaterial vorgesehen werden, so dass die Fasern anschließend im Lösungsmittel schwimmen. Für die Mikrowellenbehandlung ist es allerdings erforderlich, passende Stücke des Verbundmaterials vorzubereiten, weshalb auch hier in der Regel die Fasern gegenüber dem Zustand im Originalbauteil zerkleinert werden.

Aus der EP 22822879 B1 ist es bekannt, die Kohlenstofffasern z.B. mittels eines Pyrolyseprozesses, für ein Recycling vom Matrixmaterial zu trennen. Die dabei entstehenden freien Fasern werden mit einem Bindemittel versehen. Mit dem Bindemittel werden Pakete von Fasern erzeugt, die in ihrer Struktur der Anordnung im ursprünglichen Material entsprechen. Die Bildung von Faserschlaufen wird vermieden, und die Pakete können zur Fertigung von neuem Halbzeug verwendet werden. Auch diese Verfahrensweise erfordert jedenfalls bei großen Bauteilen eine Zerstückelung des ursprünglichen Verbundmaterials.

Aus der WO 2010075952 A1 sind ein Verfahren und eine Vorrichtung zum Rückgewinnen von Kohlenstofffasern aus kohlenstofffaserverstärkten Kunststoffgegenständen bekannt, bei denen eine Prozesskammer vorgesehen ist, die mindestens eine Mikrowellen-Strahlenquelle und/oder mindestens einen Heißgas-Einlass und/oder mindestens eine elektrische Widerstandsheizung aufweist. Wiederum ist eine Abtrennung des Matrixmaterials von den Fasern das Ziel. Das wieder zu verwertende Verbundmaterial wird stückweise über ein endloses Förderband durch die jeweiligen Behandlungsstufen geführt, so dass endlose Kohlenstofffasern nicht als Recyclingprodukt erhalten werden können.

Aus der DE 102010031602 A1 ist ein Verfahren bekannt, bei dem für einen Recyclingprozess ebenfalls ein Pyrolyseprozess vorgesehen wird, um die Matrix abzutrennen. Das Ausgangsmaterial wird erforderlichenfalls zerstückelt. Die Pyrolysegase können zur Energiegewinnung eingesetzt werden.

Aus der WO 2012/085000 A1 ist ein Verfahren der eingangs genannten Art bekannt, bei dem das vom Bauteil abgezogene Material in Stücke geschnitten wird, um daraus mit einem Umformprozess durch Heißpressen in einer Form recyceltes Material zu erzeugen. Die Länge der im Rezyklat erhaltenen Fasern ist durch den Schneideprozess bzw. die Größe der Form beschränkt.

Die EP 2 977 190 A1 offenbart ein Verfahren und eine Vorrichtung zur Ausbesserung schadhafter Stellen an einem Bauteil aus Faserverbundmaterial. Das in Schichten abgezogene Material wird gesammelt, um eine Verschmutzung des Bauteils hiermit zu vermeiden, und anschließend als Abfall entsorgt. Ein Recycling ist nicht angesprochen. Der Erfindung liegt das technische Problem zugrunde, ein Verfahren sowie eine Vorrichtung der eingangs genannten Art zur Verfügung zu stellen, die eine Alternative zum Stand der Technik darstellen und ein verbessertes Recycling-Ergebnis, insbesondere unter Erhalt größerer Längen des Fasermaterials bieten können.

Das technische Problem wird bei einem Verfahren mit den kennzeichnenden Merkmalen des Anspruchs 1 und bei einer Vorrichtung mit den kennzeichnenden Merkmalen des Anspruchs 10 gelöst.

Bevorzugte Ausführungsbeispiele des erfindungsgemäßen Verfahrens sowie der erfindungsgemäßen Vorrichtung sind in den abhängigen Ansprüchen dargestellt. Demnach wird das Faserverbundmaterial, das der Wiederverwertung zugeführt werden soll, schichtweise im Verbund von Fasern und Matrixmaterial vom restlichen Bauteil abgezogen. Dabei werden die reversiblen Schmelzeigenschaften der thermoplastischen Matrix ausgenutzt. Das Verfahren ist allgemein für Verstärkungsfasern aller Art geeignet, insbesondere für Kohlenstofffasern, aber auch z.B. Glasfasern oder Basaltfasern.

Da das Faserverbundmaterial dem Bauteil in der Regel in mehreren Schichten vorliegt, erfolgt das Abziehen der Abzieh-Schicht von einer darunterliegenden weiteren Schicht desselben Faserverbundmaterials. Die Abzieh-Schicht kann aber auch abgelöst werden von einem Basismaterial, z.B. einem anderen Faserverbundmaterial oder von einem Basismaterial des Bauteils, auf dem die ursprünglich unterste Schicht oder einzige Schicht des Faserverbundmaterials aufgebracht wurde. Bei einer Abzieh-Schicht handelt es sich vorzugsweise um eine vollständige Laminatschicht, wie sie zuvor im Bauteil vorhanden war.

Unter Anwendung des erfindungsgemäßen Verfahrens kann auf eine Trennung des Matrixmaterials von den Fasern und auf ein die Faserlänge kürzendes Zerschneiden verzichtet werden. Wenn Matrixmaterial und Fasern im Verbund des Recyclats verbleiben, kann ein erheblicher Energieaufwand zur Herstellung eines neuen einsatzfähigen Materials, insbesondere der Energieaufwand für die Faserherstellung und/oder die Imprägnierung, eingespart werden. Der beschriebene Recycle-Prozess kann für viele Herstellungsprozesse von Bauteilen mit Faserverbundmaterial als Umkehrung eines Herstellungsschrittes betrachtet werden, nämlich dem schichtweisen Auftragen des Faserverbundmaterials und dem Verbinden der Schichten. Das Abziehen des Faserverbundmaterials kann so erfolgen, dass ein einziges zusammenhängendes Recyclat-Stück entsteht. Bei ein und demselben Bauteil kann das Abziehen einer Abzieh-Schicht aber auch mehrfach gestartet werden, so dass aus einem Bauteil eine Vielzahl von Recyclat-Stücken entstehen können. Ein Recyclat-Stück kann eine Länge von mehreren Zentimetern bis mehreren Kilometern, z.B. 10 km, aufweisen können

Für das Abziehen der Abzieh-Schicht kann vorgesehen werden, das Faserverbundmaterial zu erwärmen. Dabei kann global das gesamte Faserverbundmaterial erwärmt werden oder lokal beschränkt das Faserverbundmaterial im Ablösebereich. Die Erwärmung erleichtert den Abziehprozess und kann Beschädigungen der Abzieh-Schicht verhindern. Mögliche Heizquellen sind z. B. Infrarotstrahler, Laser, elektrischer Widerstand, Heißluft oder Heißgas, Mikrowelle, Ultraschall oder ein Ofen, z.B. ein Umluftofen. Die Prozesstemperatur kann dabei sowohl unterhalb als auch oberhalb der Schmelztemperatur des Matrixmaterials des Faserverbundmaterials liegen.

Das erfindungsgemäße Verfahren kann auch so ausgeführt werden, dass das Faserverbundmaterial in Bandform abgezogen wird. Eine bandförmige Abzieh-Schicht hat den Vorteil, dass das abgelöste Faserverbundmaterial leicht auf einem Vorratselement, insbesondere auf einer Vorratsrolle, gesammelt werden kann. Wenn das ursprüngliche Faserverbundmaterial bereits in Bandform geliefert und für die Fertigung des Bauteils aufgetragen wurde, kann es erreicht werden, dass das abgezogene Material dem ursprünglichen Bandmaterial zumindest weitgehend entspricht. Idealerweise kann das aufgesammelte bandförmige Material gleich wieder für die Herstellung eines neuen Bauteils eingesetzt werden.

Generell kann die Abzieh-Schicht weitgehend in der Form dem ursprünglich aufgebrachten Material entsprechen. Wurde das ursprüngliche Material z.B. in einem Bändchenablageprozess oder einem Wickelprozess in mehreren Schichten hergestellt, kann die Abzieh-Schicht dem ursprünglichen Band entsprechen. Das erfindungsgemäße Verfahren kann auch bei Ausgangsmaterial durchgeführt werden, welches auf andere Weise als durch einen Tapelegeprozess oder Wickelprozess hergestellt wurde, beispielsweise ohne Einsatz eines Lasers, z.B. durch anderweitige Erwärmung und anschließendem Pressen. Die Abzieh-Schicht kann auch rotationssymmetrisch, plattenartig oder in anderer Weise geformt sein.

Das erfindungsgemäße Verfahren kann auch so ausgeführt werden, dass zum Abtrennen der Abzieh-Schicht vom Bauteil ein Trennwerkzeug eingesetzt wird. Bei einem solchen Trennwerkzeug kann es sich z. B. um ein Schermesser oder um ein keilförmiges Trennelement handeln, das im Zwickelbereich, d. h. an der Kontaktstelle zwischen der Abzieh-Schicht und dem noch im Bauteil verbliebenen Material, eingesetzt wird.

Das Trennwerkzeug kann erwärmt sein, z. B. durch Wärmeleitung, elektrischen Widerstand, Bestrahlung oder anderen Maßnahmen. Es kann vorgesehen werden, dass die Abzieh-Schicht mittels einer gegenüber dem Trennwerkzeug angeordneten Führungsrolle geführt wird. Hierdurch kann ein Knicken der Abzieh-Schicht und damit der darin vorhandenen Fasern verhindert werden. Auch die Führungsrolle kann beheizt sein.

Das erfindungsgemäße Verfahren wird so ausgeführt, dass bei der Herstellung des Bauteils Bauteildaten, insbesondere zur Faserlage und/oder Verlegerichtung gespeichert und für die Unterstützung des Recyclingverfahrens, insbesondere zur Ermittlung einer Abziehrichtung und/oder eines Startpunkts für den Abziehprozess, verwendet werden.

Das Ablösen der Abzieh-Schicht erfolgt idealerweise in Faserrichtung, um eine Zerstörung der Fasern oder eines Teils der Fasern möglichst zu verhindern. Ist die bei der Herstellung des Bauteils eingesetzte Verlegerichtung bekannt, kann in umgekehrter Richtung die Ablösung der Abzieh-Schicht erfolgen, so dass in Richtung des Faserverlaufs abgelöst wird. Idealerweise kann dabei die Faserstruktur über die gesamte Länge des abzuziehenden Fasermaterials erhalten bleiben. Des Weiteren kann erreicht werden, dass neben den Fasern auch das Matrixmaterial weitgehend unbeschädigt bleibt, so dass die Abzieh-Schicht im Idealfall ohne weitere Bearbeitung desselben wieder verwendet werden kann.

Die Bauteildaten können auslesbar im oder am Bauteil gespeichert werden, z. B. durch RFID (radio frequency identification) oder QR-Code oder Barcode. Die Daten können selbstverständlich auch in einem gesonderten Datenträger getrennt vom Bauteil vorliegen.

Das Bauteil kann auch Markierungen aufweisen, die eine automatische Erkennung der geometrischen Orientierung des Bauteils im Raum ermöglicht, wodurch eine automatische Verarbeitung des Bauteils zum Recycling unterstützt werden kann.

Das erfindungsgemäße Verfahren kann auch so ausgeführt werden, dass mittels mindestens eines nicht zerstörenden Materialprüfungsverfahrens das Faserverbundmaterial vor, während und/oder nach der Ablösung vom restlichen Bauteil untersucht wird und das Ergebnis der Untersuchung zur Steuerung oder Regelung des Abziehprozesses eingesetzt wird.

Es ist des Weiteren möglich, die Abzieh-Schicht in ihrer Form zu verändern, insbesondere durch Pressen, z. B. mittels mindestens eines Kalanders, und/oder durch Materialauftrag, z. B. durch Extrusion. Mit dem Materialauftrag kann degradiertes oder verlorenes Matrixmaterial ersetzt werden. Auch die Formgebung durch ein Pultrusionswerkzeug ist denkbar.

Es ist auch denkbar, Teile der Abzieh-Schicht nach dem Ablösen vom Bauteil abzutrennen, z. B. durch einen Schneideprozess. Dies kann erforderlich werden, um zu stark beschädigtes Material zu entfernen oder die Abmessungen der Abzieh-Schicht auf ein bestimmtes benötigtes Maß zu verringern.

Des Weiteren kann das erfindungsgemäße Verfahren auch eine Trennung von Fasern und Matrixmaterial in der Abzieh-Schicht vorsehen, z.B. durch aus dem Stand der Technik bekannte Trennverfahren, wie z.B. mittels Mikrowelle oder Pyrolyse. Dabei kann das Fasermaterial für die Herstellung eines neuen Faserverbundmaterials eingesetzt werden.

Eine erfindungsgemäße Vorrichtung kann gleichzeitig zur Herstellung von Neubauteilen aus dem recycelten Faserverbundmaterial eingerichtet sein. Somit ist eine Kombinationsvorrichtung gegeben, die sowohl ein Recyclat als auch ein Neubauteil aus dem gewonnenen Recyclat herstellen kann. Eine solche Kombinationsvorrichtung kann z.B. durch Einbau eines Recycling-Moduls in eine bestehende Neubauteil-Produktionsanlage, z.B. eine Wickelanlage, verwirklicht werden.

Beispielhafte Ausführungsformen des erfindungsgemäßen Verfahrens sowie der erfindungsgemäßen Vorrichtung sind im Folgenden anhand zweier Figuren dargestellt.

Es zeigt schematisch
- Fig. 1:: das Recycling von Faserverbundmaterial von einem Bauteil mit runder Oberfläche und
- Fig. 2:: das Recycling von Faserverbundmaterial von einem plattenförmigen Bauteil.

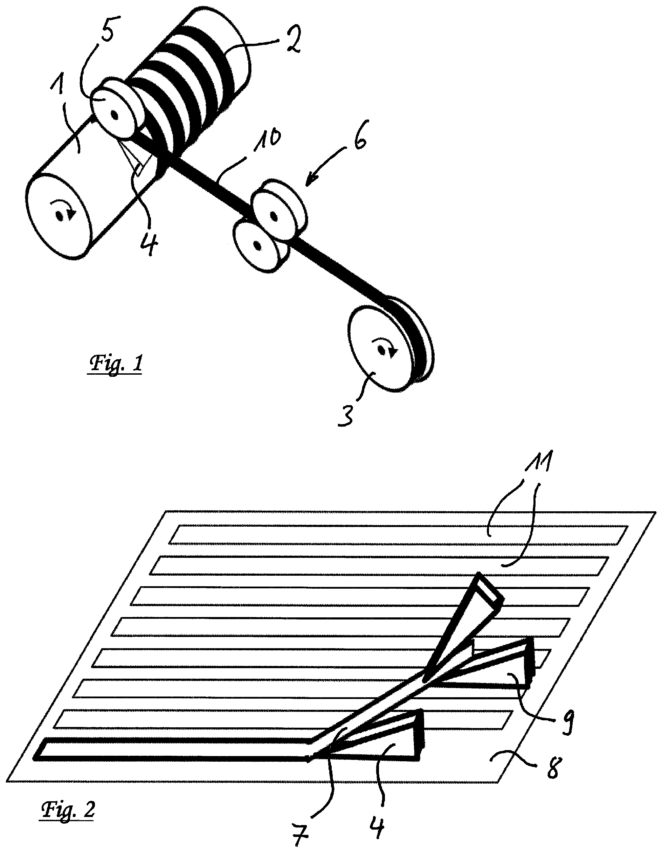

Fig. 1 zeigt ein Bauteil 1 in Zylinderform, dessen Oberfläche aus einem Band 2 aus einem Faserverbundmaterial hergestellt ist. Üblicherweise sind auf einem solchen Bauteil 1 mehrere Schichten des Bandes 2 abgelegt, wobei - hier nicht dargestellt - das Band 2 in den unterschiedlichen Schichten unterschiedliche Orientierungen aufweisen kann. Hier ist lediglich zur einfacheren Darstellung und Erkennbarkeit das Band 2 in einer einzigen Schicht und mit Abstand zwischen den Umläufen dargestellt.

Für das Ablösen des Faserverbundmaterials wird mit einem hier nicht dargestellten Greifer eine Abzieh-Schicht 10 vom Bauteil 1 abgehoben und einer Vorratsrolle 3 zugeführt. Die Abzieh-Schicht 10 entspricht in der Form dem auf dem Bauteil 1 befindlichen Band 2 oder ist im Idealfall mit diesem identisch. Zur Erleichterung des Ablösens der Abzieh-Schicht 10 ist ein keilförmiges Trennwerkzeug 4 vorgesehen, welches zwischen dem bereits abgelösten Teil der Abzieh-Schicht 10 und dem Bauteil 1 eingreift. Mittels einer Führungsrolle 5 wird die Abzieh-Schicht 10 geführt, wodurch einem möglichen Knicken der Abzieh-Schicht 10 und der hier nicht gesondert dargestellten in der Abzieh-Schicht 10 enthaltenen Fasern vorgebeugt wird. Vor dem Aufrollen auf die Vorratsrolle 3 durchläuft die Abzieh-Schicht 10 noch ein Rollenpaar 6, welches z. B. zur Formgebung als Kalander für die Abzieh-Schicht 10 und/oder zur Stabilisierung der Orientierung der Abzieh-Schicht 10 im Raum dienen kann. Auf die dargestellte Weise, kann das komplette auf dem Bauteil 1 befindliche Band 2 als Abzieh-Schicht 10 auf die Vorratsrolle 3 aufgespielt und anschließend einem Verwertungsprozess zugeführt werden. Dabei kann die Abzieh-Schicht 10 unzerstörte Endlosfasern enthalten.

Fig. 2 zeigt das Ablösen einer weiteren Abzieh-Schicht 7 eines Faserverbundmaterials, hier jedoch in Streifenform, welches sich an einem plattenförmigen Bauteil 8 befindet, dessen Ausdehnung in seiner Ebene die Länge von Streifen 11 des Faserverbundmaterials beschränkt. Mit einer zangenförmigen Greifeinheit 9, von der in Fig. 2 schematisch lediglich zwei Zangenelemente zu sehen sind, wurde die Abzieh-Schicht 7 gegriffen und vom Bauteil 8 abgehoben. Dabei wird ein keilförmiges Trennwerkzeug 4 zur Unterstützung des Ablöseprozesses eingesetzt. Über seine gesamte Länge hinweg kann die Abzieh-Schicht 10 so ohne Zerstörung der darin enthaltenen Fasern vom Bauteil 1 abgehoben werden. Die streifenförmigen Abzieh-Schichten 7, die im Idealfall den ursprünglich auf dem Bauteil befindlichen Streifen 11 entsprechen, können gesammelt und einer Wiederverwertung zugeführt werden.

### Bezugszeichenliste

- 1: Bauteil
- 2: Band
- 3: Vorratsrolle
- 4: Trennwerkzeug
- 5: Führungsrolle
- 6: Rollenpaar
- 7: Streifen
- 8: Bauteil
- 9: Greifeinheit
- 10: Abzieh-Schicht
- 11: Streifen

## Patentansprüche

1. Verfahren für das Recycling von thermoplastischem Faserverbundmaterial, welches in mindestens einer Ablage-Schicht in einem Bauteil (1) angeordnet ist, bei dem in Richtung einer Hauptfaserrichtung das Faserverbundmaterial in mindestens einer Fasern und Matrixmaterial umfassenden Abzieh-Schicht (10) vom restlichen Bauteil (1) abgezogen wird, **dadurch gekennzeichnet, dass** bei der Herstellung des Bauteils (1) Bauteildaten, insbesondere zur Faserlage und/oder Verlegerichtung, gespeichert und für die Unterstützung des Recyclingverfahrens, insbesondere zur Ermittlung einer Abziehrichtung und/oder eines Startpunkts für den Abzieh-Prozess, verwendet werden.

2. Verfahren nach Anspruch 1, **dadurch gekennzeichnet, dass** das abgelöste Faserverbundmaterial auf einem Vorratselement gesammelt wird, wobei vorzugsweise das Vorratselement eine Vorratsrolle (3) ist.

3. Verfahren nach Anspruch 1 oder 2, **dadurch gekennzeichnet, dass** das Faserverbundmaterial zumindest in einem Ablösebereich erwärmt wird.

4. Verfahren nach einem der vorherigen Ansprüche, **dadurch gekennzeichnet, dass** das Faserverbundmaterial in Bandform abgezogen wird.

5. Verfahren nach einem der vorherigen Ansprüche, **dadurch gekennzeichnet, dass** zum Abtrennen der mindestens einen Abzieh-Schicht (10) vom Bauteil (1) ein Trennwerkzeug (4) eingesetzt wird, wobei das Trennwerkzeug (4) erwärmt wird.

6. Verfahren nach Anspruch 5, **dadurch gekennzeichnet, dass** die mindestens eine Abzieh-Schicht (10) mittels einer gegenüber dem Trennwerkzeug angeordneten Führungsrolle (5) geführt wird.

7. Verfahren nach einem der vorherigen Ansprüche, **dadurch gekennzeichnet, dass** mittels mindestens eines nicht zerstörenden Materialprüfungsverfahrens das Faserverbundmaterial vor, während und/oder nach der Ablösung vom restlichen Bauteil (1) untersucht wird und das Ergebnis der Untersuchung zur Steuerung oder Regelung des Abzieh-Prozesses eingesetzt oder zu Dokumentationszwecken gespeichert wird.

8. Verfahren nach einem der vorherigen Ansprüche, **dadurch gekennzeichnet, dass** am Bauteil (1) Marker zur Positionsbestimmung angebracht werden.

9. Verfahren nach einem der vorherigen Ansprüche, **dadurch gekennzeichnet, dass** die Abzieh-Schicht (10) in ihrer Form verändert wird, insbesondere durch Pressen, z.B. mittels mindestens eines Kalanders (6), oder mittels mindestens eines Pultrusionswerkzeugs und/oder durch Materialauftrag.

10. Vorrichtung für das Recycling von thermoplastischem Faserverbundmaterial, welches in mindestens einer Ablage-Schicht in einem Bauteil (1) angeordnet ist, umfassend Mittel zum Abziehen mindestens einer Abzieh-Schicht (10) des Faserverbundmaterials vom restlichen Bauteil (1),
**gekennzeichnet durch**
Mittel zum Erfassen, Auswerten und Bereitstellen von in oder an dem Bauteil (1) gespeicherten Daten sowie durch Mittel zur Steuerung und/oder Regelung des Recyclingvorgangs oder Teilschritten des Recyclingvorgangs anhand der erfassten Daten.

11. Vorrichtung nach Anspruch 10, **gekennzeichnet durch** ein Vorratselement, insbesondere eine Vorratsrolle (3), und Mittel zum Sammeln des abgelösten Faserverbundmaterials auf dem Vorratselement (3).

12. Vorrichtung nach Anspruch 10 oder 11, **dadurch gekennzeichnet, dass** die Mittel zum Abziehen ein Trennwerkzeug (4) umfassen, wobei das Trennwerkzeug (4) beheizt ist.

13. Vorrichtung nach Anspruch 10 oder 11 oder 12, **dadurch gekennzeichnet, dass** die Mittel zum Abziehen mindestens eine gegenüber dem Trennwerkzeug (4) angeordnete, die Abzieh-Schicht (10) führende Führungsrolle (5) umfassen.

14. Vorrichtung nach Anspruch 13, **dadurch gekennzeichnet, dass** die mindestens eine Führungsrolle (5) oder mindestens eine der Führungsrollen (5) beheizt ist.

15. Vorrichtung nach einem der Ansprüche 10 bis 14, **dadurch gekennzeichnet, dass** die Mittel zum Abziehen mindestens eine, vorzugsweise zangenartige, Greifeinheit (9) umfassen.

## Claims

1. A method for recycling thermoplastic fiber composite material which is arranged in at least one deposition layer in a component (1), in which, in the direction of a main fiber direction, fiber composite material is pulled off the remaining component (1) in at least one pull-off layer (10) comprising fibers and matrix material, **characterized in that** during the production of the component (1), component data, in particular relating to the fiber layer and/or laying direction, is stored and is used to assist the recycling method, in particular for determining a pull-off direction and/or a starting point for the pull-off process.

2. The method as claimed in claim 1, **characterized in that** the detached fiber composite material is collected on a storage element, in particular on a storage roll (3).

3. The method as claimed in claim 1 or 2, **characterized in that** the fiber composite material is heated, at least in a detachment area.

4. The method as claimed in one of the preceding claims, **characterized in that** the fiber composite material is pulled off in tape form.

5. The method as claimed in one of the preceding claims, **characterized in that** a separating tool (4) is used to separate the at least one pull-off layer (10) from the component (1), wherein the separating tool (4) is heated.

6. The method as claimed in claim 5, **characterized in that** the at least one pull-off layer (10) is guided by means of a guide roller (5) arranged opposite the separating tool.

7. The method as claimed in one of the preceding claims, **characterized in that**, by means of at least one non-destructive material testing method, the fiber composite material is examined before, during and/or after the detachment from the rest of the component (1), and the result of the examination is used to control or regulate the pull-off process or stored for documentation purposes.

8. The method as claimed in one of the preceding claims, **characterized in that** markers for position determination are applied to the component (1).

9. The method as claimed in one of the preceding claims, **characterized in that** the shape of the pull-off layer (10) is changed, in particular by pressing, e.g. by means of at least one calender (6), or by means of at least one pultrusion tool and/or by material application.

10. A device for recycling thermoplastic fiber composite materials, which is arranged in at least one deposition layer in a component (1), comprising means for pulling off at least one pull-off layer (10) of the fiber composite material from the remaining component (1) **characterized by**
means for acquiring, evaluating and providing data stored in or on the component (1) and by means for controlling and/or regulating the recycling process or part steps of the recycling process by using the acquired data.

11. The device as claimed in claim 10, **characterized by** a storage element, in particular a storage roll (3), and means for collecting the detached fiber composite material on the storage element (3).

12. The device as claimed in claim 10 or 11, **characterized in that** the pulling-off means comprise a separating tool (4), wherein the separating tool (4) is heated.

13. The device as claimed in claim 10 or 11 or 12, **characterized in that** the pulling-of means comprise at least one guide roller (5) arranged opposite the separating tool (4) and guiding the pull-off layer (10).

14. The device as claimed in claim 13, **characterized in that** the at least one guide roller (5) or at least one of the guide rollers (5) is heated.

15. The device as claimed in one of claims 10 to 14, **characterized in that** the pull-off means comprise at least one, preferably tongs-like, gripping unit (9).

## Revendications

1. Procédé pour le recyclage de matériau thermoplastique composite fibreux,
disposé dans au moins une couche de dépôt dans un composant (1), dans lequel le matériau composite fibreux est retiré, dans un sens d'une direction principale des fibres, du composant restant (1) dans au moins une couche de retrait (10) comprenant des fibres et un matériau de matrice **caractérisé en ce que** lors de la fabrication du composant (1), des données de composant, en particulier sur la position des fibres et/ou le sens de pose, sont stockées et utilisées pour soutenir le processus de recyclage, en particulier pour déterminer un sens de tirage et/ou un point de départ pour le processus de tirage.

2. Procédé selon la revendication 1, **caractérisé en ce que** le matériau composite fibreux détaché est collecté sur un élément de stockage, de préférence l'élément de stockage est un rouleau de stockage (3).

3. Procédé selon la revendication 1 ou 2, **caractérisé en ce que** le matériau composite fibreux est chauffé au moins dans une zone de décollement.

4. Procédé selon l'une des revendications précédentes, **caractérisé en ce que** le matériau composite fibreux est retiré sous forme de ruban.

5. Procédé selon l'une des revendications précédentes, **caractérisé en ce qu'**un outil de séparation (4) est utilisé pour séparer l'au moins une couche de retrait (10) du composant (1), l'outil de séparation (4) étant chauffé.

6. Procédé selon la revendication 5, **caractérisé en ce que** l'au moins une couche de retrait (10) est guidée au moyen d'un rouleau de guidage (5) disposé en face de l'outil de séparation.

7. Procédé selon l'une des revendications précédentes, **caractérisé en ce qu'**au moyen d'au moins une méthode de contrôle non destructif des matériaux, le matériau composite fibreux est examiné avant, pendant et/ou après sa séparation du composant résiduel (1) et le résultat de l'examen est utilisé pour contrôler ou régler le processus de retrait ou est stocké à des fins de documentation.

8. Méthode selon l'une des revendications précédentes, **caractérisée en ce que** des marqueurs sont attachés à l'élément (1) pour la détermination de la position.

9. Procédé selon l'une des revendications précédentes, **caractérisé en ce que** la couche de retrait (10) est modifiée dans sa forme, en particulier par pressage, p. ex. au moyen d'au moins une calandre (6), ou au moyen d'au moins un outil de pultrusion et/ou par application de matériaux.

10. Appareil pour le recyclage d'un matériau thermoplastique composite fibreux disposé dans au moins une couche de dépôt dans un composant (1), comprenant des moyens pour retirer au moins une couche de retrait (10) du matériau composite fibreux du reste du composant (1),
**caractérisé par**
des moyens d'enregistrement, d'évaluation et de mise à disposition de données stockées dans ou sur le composant (1)
et par des moyens de commande et/ou de régulation du processus de recyclage ou des étapes partielles du processus de recyclage sur la base des données enregistrées.

11. Appareil selon la revendication 10, **caractérisé par** un élément de stockage, en particulier un rouleau de stockage (3), et des moyens pour recueillir le matériau composite fibreux détaché sur l'élément de stockage (3).

12. Appareil selon la revendication 10 ou 11, **caractérisé en ce que** les moyens de retrait comprennent un outil de séparation (4), l'outil de séparation (4) étant chauffé.

13. Appareil selon la revendication 10, 11 ou 12, **caractérisé en ce que** les moyens de retrait comprennent au moins un rouleau de guidage (5) disposé en face de l'outil de séparation (4) et guidant la couche de retrait (10).

14. Appareil selon la revendication 13, **caractérisé en ce que** l'au moins un rouleau de guidage (5) ou au moins un des rouleaux de guidage (5) est chauffé.

15. Appareil selon une des revendications 10 à 14, **caractérisé en ce que** les moyens de retrait comprennent au moins une unité de préhension (9) de préférence en forme de pince.
